# EUROPEAN PATENT APPLICATION

(11) **EP 4 190 743 A1**
(43) Date of publication of application: **07.06.2023**
(21) Application number: 21849673.5
(22) Date of filing: 30.07.2021
(51) Int. Cl.: C01B 25/14, H01M 10/052, H01M 10/0562, H01B 1/06, H01B 13/00

(54) **METHOD FOR PRODUCING SULFIDE SOLID ELECTROLYTE, AND SULFIDE SOLID ELECTROLYTE**

(30) Priority: 31.07.2020 JP 2020130799
(71) Applicant: AGC INC., Chiyoda-ku, Tokyo 1008405 (JP)
(72) Inventor: FUJII, Naoki, Tokyo 100-8405 (JP); TANAKA, Hiroaki, Tokyo 100-8405 (JP); TERAZONO, Shinji, Tokyo 100-8405 (JP); HAYASHI, Hideaki, Tokyo 100-8405 (JP)
(74) Representative: Müller-Boré & Partner Patentanwälte PartG mbB
(86) International application number: PCT/JP2021/028382
(87) International publication number: WO 2022/025268

(57) **Abstract**

The present invention relates to a method for producing a sulfide solid electrolyte, said method comprising: a step for obtaining an intermediate by heating a starting material that contains elemental lithium, elemental sulfur and elemental phosphorus; and a step for heating and melting the intermediate in a gas atmosphere that contains elemental sulfur.

## Description

### TECHNICAL FIELD

The present invention relates to a manufacturing method of a sulfide solid electrolyte and a sulfide solid electrolyte.

### BACKGROUND ART

Lithium-ion batteries are used broadly in portable electronic devices such as cellphones and laptops.

Although liquid electrolytes have been used conventionally in lithium-ion secondary batteries, there is concern about liquid leakage, bursting into flames, etc. and it is necessary to use a large case for safety designing. Furthermore, improvements are desired about a short battery life and a narrow operation temperature range.

In this situation, all-solid-state lithium-ion secondary batteries that employ a solid electrolyte as an electrolyte of a lithium ion secondary battery are attracting attention because they are expected to, for example, increase safety and enable high-speed charging/discharging, and miniaturization of a case.

Solid electrolytes are generally classified into sulfide solid electrolytes and oxide solid electrolytes. Sulfide ions are higher in polarizability and exhibit higher ion conductivity than oxide ions. Examples of the sulfide solid electrolytes include a sulfide solid electrolyte including a lithium element, a sulfur element, and a phosphorus element, and examples of methods for manufacturing this solid electrolyte include a sealed glass tube method, a mechanical milling method, a melting method, etc. However, the sealed glass tube method and the mechanical milling method are manufacturing methods unsuitable for mass production because these methods are batch processes and require a prolonged time period for the reaction.

Meanwhile, the melting method, although being a manufacturing method capable of mass production, has the following problem. Diphosphorus pentasulfide (P₂S₅) as a starting material has a boiling point of 514°C, while lithium sulfide (Li₂S) has a melting point of 938°C. Because of this, heating and melting Li₂S at a temperature results in vaporization of P₂S₅ at temperatures far lower than the temperature of the heating and melting. It is hence difficult to control the composition of the sulfide solid electrolyte to be obtained.

Patent literature 1, for example, discloses, as a means for solving that problem, a feature that a composite compound having a composition including lithium, phosphorus, and sulfur is used as a starting material in manufacturing a lithium-ion-conductive material. Patent literature 1 discloses that this method is free from the problem that only a P₂S₅ component vaporizes during melting, that is, a sulfur component and a phosphorus component vaporize, and it is hence possible to stably produce a homogeneous lithium-ion-conductive material having a desired composition.

### CITATION LIST

### PATENT LITERATURE

Patent literature 1: JP-A-2012-43654

### SUMMARY OF INVENTION

### TECHNICAL PROBLEMS

However, the composite compound itself described in Patent literature 1 is regarded as an intermediate obtained by heating, for example, a mixture of Li₂S and P₂S₅, and a sulfur component and a phosphorus component are still prone to vaporize in a step for obtaining the composite compound. The related-art technique still has room for improvement regarding composition control from starting materials to the desired sulfide solid electrolyte.

If composition control is insufficient, it is apt to result in a difference between the desired composition of a sulfide solid electrolyte and an actually obtained composition. In this case, the obtained sulfide solid electrolyte is prone to be inhomogeneous. And this inhomogeneous sulfide solid electrolyte is sometimes inferior in lithium-ion conductivity. That is, the related-art technique has room for improvement concerning not only composition control but also the homogeneity and lithium-ion conductivity of the sulfide solid electrolyte to be obtained.

An object of the present invention is to provide a manufacturing method of a sulfide solid electrolyte, in which the vaporization of a sulfur component and a phosphorus component is inhibited to attain excellent composition control with a reduced compositional difference from a starting material and mass production is easy. Another object of the present invention is to provide a sulfide solid electrolyte having excellent homogeneity and excellent lithium-ion conductivity.

### SOLUTION TO PROBLEMS

The present inventors have studied diligently and, as a result, have discovered that those problems can be solved by heat-treating a starting material including a lithium element, a sulfur element, and a phosphorus element to obtain an intermediate and heating and melting the intermediate in an atmosphere of a gas including a sulfur element. The present invention has been thus completed.

The present invention relates to the following [1] to [13]
[1] A manufacturing method of a sulfide solid electrolyte, including:
   heat-treating a starting material including a lithium element, a sulfur element, and a phosphorous element to obtain an intermediate; and
   heating and melting the intermediate in an atmosphere of a gas including a sulfur element.
[2] The manufacturing method of a sulfide solid electrolyte according to [1], in which in the heat treatment, the starting material is heated at a temperature in a range of 250°C to 500°C.
[3] The manufacturing method of a sulfide solid electrolyte according to [1] or [2], further including recovering a sulfur-element-containing component that vaporizes from the starting material in obtaining the intermediate,
   in which a gas derived from the sulfur-element-containing component is used as at least some of the gas including the sulfur element.
[4] The manufacturing method of a sulfide solid electrolyte according to any one of [1] to [3], in which the starting material includes one or more substances selected from the group consisting of a metallic lithium, a lithium sulfide, a lithium carbonate, a lithium sulfate, a lithium oxide, and a lithium hydroxide.
[5] The manufacturing method of a sulfide solid electrolyte according to any one of [1] to [4], in which the intermediate includes at least one of Li₄P₂S₆ and Li₃PS₄.
[6] The manufacturing method of a sulfide solid electrolyte according to any one of [1] to [5], in which the starting material further includes a halogen element.
[7] The manufacturing method of a sulfide solid electrolyte according to any one of [1] to [6], in which the starting material includes one or more compounds selected from the group consisting of a lithium chloride, a lithium bromide, and a lithium iodide.
[8] The manufacturing method of a sulfide solid electrolyte according to any one of [1] to [7], in which the sulfide solid electrolyte to be obtained has an argyrodite crystal structure.
[9] The manufacturing method of a sulfide solid electrolyte according to any one of [1] to [8], further including cooling a melt obtained by the heating and melting to obtain a solid,
   in which the melt includes 0.01 mass% or more of a compound serving as a crystal nucleus and
   the solid is a sulfide solid electrolyte including a crystalline phase.
[10] The manufacturing method of a sulfide solid electrolyte according to any one of [1] to [8], further including rapidly cooling a melt obtained by the heating and melting to obtain a solid.
[11] The manufacturing method of a sulfide solid electrolyte according to [10], in which the rapid cooling is conducted at a cooling rate of 10 °C/sec or higher and
   the melt has a content of a compound serving as a crystal nucleus of 1 mass% or less.
[12] The manufacturing method of a sulfide solid electrolyte according to any one of [9] to [11], further including subjecting the solid to a heat treatment again.
[13] A sulfide solid electrolyte, in which in an examination by Raman spectroscopy under conditions of a spot diameter of 3 µm and 10 test portions, a standard deviation of peak positions of P-S-bond-derived peaks in a range of 350 cm⁻¹ to 500 cm⁻¹ for the respective test portions is 2 cm⁻¹ or less.

### ADVANTAGEOUS EFFECTS OF INVENTION

In the manufacturing method of a sulfide solid electrolyte of the present invention, the desired sulfide solid electrolyte is obtained from a starting material via an intermediate and, because of this, a sulfur component and a phosphorus component included in the starting material can be inhibited from vaporizing. The production via the intermediate also makes composition control easy as compared with the case where the desired sulfide solid electrolyte is obtained directly from the starting material. Although some of the sulfur component still vaporizes in a certain amount in obtaining the intermediate, a sulfur component can be introduced in an amount sufficient for obtaining a sulfide solid electrolyte having a desired composition, by heating and melting the intermediate in an atmosphere of a gas including a sulfur element.

In particular, the intermediate in the manufacturing method of the present invention is in a thermodynamically stable state, and the intermediate which has been synthesized can hence be taken out after the reaction temperature is lowered to room temperature. The intermediate thus taken out can be temporarily stored or can be used in the subsequent melting step. Furthermore, since the intermediate in the manufacturing method of the present invention is synthesized through controlled reactions, clear compositional information can be acquired by analyzing the intermediate for composition in detail. For these reasons, in the manufacturing method of a sulfide solid electrolyte of the present invention, it is easy to control the amount of sulfur to be introduced into the molten-state intermediate in an atmosphere of a gas including a sulfur element (S) in the melting step. Hence, sulfur deficiency is little and a compositional difference is less apt to occur.

A manufacturing method of a sulfide solid electrolyte in a melting method capable of mass production can be provided in which, due to the inclusion of those steps, the difference between the composition of a desired sulfide solid electrolyte and the composition of a sulfide solid electrolyte obtained from a starting material is small and composition control is easy. Since this manufacturing method is excellent in terms of composition control, properties of the sulfide solid electrolyte to be obtained can also be controlled more satisfactorily. As a result, a sulfide solid electrolyte having high lithium-ion conductivity and suitable for use as the electrolyte of a lithium-ion secondary battery can be easily and stably produced with high reproducibility. Furthermore, since this manufacturing method is excellent in terms of composition control, the obtained sulfide solid electrolyte has excellent homogeneity and excellent lithium-ion conductivity.

### BRIEF DESCRIPTION OF DRAWINGS

[FIG. 1] FIG. 1 is a diagram showing the results of an examination of the sulfide solid electrolyte of Example 1 by XRD.
[FIG. 2] FIG. 2 is a diagram showing the results of an examination of the sulfide solid electrolyte of Example 1 by Raman spectroscopy.
[FIG. 3] FIG. 3 is a diagram showing the results of an examination of the sulfide solid electrolyte of Example 2 by XRD.
[FIG. 4] FIG. 4 is a diagram showing the results of an examination of the sulfide solid electrolyte of Example 2 by Raman spectroscopy.

### DESCRIPTION OF EMBODIMENTS

Although the present invention will be hereinafter described in detail, the present invention is not limited to the following embodiment and can be practiced being modified in a desired manner within such a range as not to depart from the spirit and scope of the present invention. Furthermore, the symbol "-" or the word "to" indicating a numerical value range is used in such a sense as to include numerical values written before and after the symbol or the word as a lower limit value and an upper limit value of the range, respectively.

### <Manufacturing Method of Sulfur-based Solid Electrolyte>

The manufacturing method of a sulfide solid electrolyte according to an embodiment of the present invention (hereinafter sometimes referred to as this manufacturing method) includes a step (intermediate synthesis step) in which a starting material including a lithium element, a sulfur element, and a phosphorus element is heat-treated to obtain an intermediate and a step (heating/melting step) in which the intermediate is heated and melted in an atmosphere of a gas including a sulfur element.

This manufacturing method may further include a step (cooling step) in which a melt obtained by the heating and melting is cooled, a step (reheating step) in which a solid obtained in the cooling step is heat-treated again, and other suitable steps, e.g., a pulverization step and a drying step. These steps are explained below.

### [Intermediate Synthesis Step]

This manufacturing method includes an intermediate synthesis step in which a starting material including a lithium element, a sulfur element, and a phosphorus element is heat-treated to obtain an intermediate.

### (Starting Material)

The starting material for this manufacturing method includes a lithium element (Li), a sulfur element (S), and a phosphorus element (P). As this starting material, use can be made of a suitable combination of, for example, a substance (component) including Li, such as elemental Li or a Li-containing compound, a substance (component) including S, such as elemental S or a S-containing compound, and a substance (component) including P, such as elemental P or a P-containing compound. The Li-containing compound, the S-containing compound, or the P-containing compound may be a compound including two or more elements selected from among Li, S, and P. Examples of a compound serving as both the S-containing compound and the P-containing compound include diphosphorus pentasulfide (P₂S₅).

Examples of the substance including Li include lithium compounds such as lithium sulfide (Li₂S), lithium carbonate (Li₂CO₃), lithium sulfate (Li₂SO₄), lithium oxide (Li₂O), and lithium hydroxide (LiOH) and metallic lithium. From the viewpoints of the ease of synthesizing the intermediate and handleability, it is preferred to use lithium sulfide.

Meanwhile, since lithium sulfide is expensive, it is preferred to use a lithium compound other than lithium sulfide or metallic lithium, etc., from the viewpoint of reducing the cost of manufacturing the sulfide solid electrolyte. Specifically, the starting material in this case preferably includes, as the substance(s) including Li, one or more substances selected from the group consisting of metallic lithium, lithium carbonate (Li₂CO₃), lithium sulfate (Li₂SO₄), lithium oxide (Li₂O), and lithium hydroxide (LiOH). One of these substances may be used alone or two or more thereof may be used in combination.

Examples of the substance including S include phosphorus sulfides such as diphosphorus trisulfide (P₂S₃) and diphosphorus pentasulfide (P₂S₅), other sulfur compounds containing phosphorus, elemental sulfur, and sulfur-containing compounds. Examples of the sulfur-containing compounds include H₂S, CS₂, iron sulfides (e.g., FeS, Fe₂S₃, FeS₂, and Fe₁₋ₓS), bismuth sulfide (Bi₂S₃), and copper sulfides (e.g., CuS, Cu₂S, and Cu₁₋ₓS). From the viewpoints of the ease of reactions in the intermediate synthesis step and of preventing the inclusion of elements other than the elements constituting the desired sulfide solid electrolyte, preferred substances including S are phosphorus sulfides. More preferred is diphosphorus pentasulfide (P₂S₅). One of those substances may be used alone or two or more thereof may be used in combination. Each of the phosphorus sulfides is regarded as a compound serving as both the substance including S and the substance including P.

Examples of the substance including P include phosphorus compounds such as phosphorus sulfides, e.g., diphosphorus trisulfide (P₂S₃) and diphosphorus pentasulfide (P₂S₅), and sodium phosphate (Na₃PO₄) and elemental phosphorus. From the viewpoints of the ease of reactions in the intermediate synthesis step and of preventing the inclusion of elements other than the elements constituting the desired sulfide solid electrolyte, preferred substances including P are phosphorus sulfides. More preferred is diphosphorus pentasulfide (P₂S₅). One of those substances may be used alone or two or more thereof may be used in combination.

The starting material for this manufacturing method is obtained, for example, by suitably mixing those substances in accordance with the composition of the desired sulfide solid electrolyte or intermediate. There are no particular limitations on mixing ratio. For example, the molar ratio of Li to P, Li/P, in the starting material is preferably 65/35 or higher, more preferably 70/30 or higher, from the viewpoint of synthesizing the desired intermediate with satisfactory accuracy.

One example of preferred combinations of those compounds is a combination of Li₂S and P₂S₅. In the case of using Li₂S and P₂S₅ in combination, the molar ratio of Li to P, Li/P, is preferably from 65/35 to 88/12, more preferably from 70/30 to 88/12. Regulating the mixing ratio so that the amount of P₂S₅ is relatively small to that of Li₂S makes it easy to inhibit a sulfur component and a phosphorus component from vaporizing during the heat treatment due to the boiling point of P₂S₅, which is lower than the melting point of Li₂S.

The starting material for this manufacturing method may contain other substances (compounds, etc.) besides the substances shown above, either in accordance with the composition of the desired sulfide solid electrolyte or intermediate or as additives, etc.

For example, in the case of manufacturing a sulfide solid electrolyte containing a halogen element such as F, Cl, Br, and I, the starting material preferably contains the halogen element (Ha). In this case, the starting material preferably contains a compound containing the halogen element. Examples of the compound containing the halogen element include lithium halides such as lithium fluoride (LiF), lithium chloride (LiCl), lithium bromide (LiBr), and lithium iodide (LiI), phosphorus halides, halogenophosphoryl compounds, sulfur halides, sodium halides, and boron halides. From the viewpoints of the ease of reactions in the intermediate synthesis step and of preventing the inclusion of elements other than the elements constituting the desired sulfide solid electrolyte, preferred halogen-element-containing compounds are lithium halides. More preferred are LiCl, LiBr, and LiI. One of these compounds may be used alone or two or more thereof may be used in combination.

In the case where the compound containing the halogen element is contained in the starting material, there are cases where the compound containing the halogen element does not react in the heat treatment for obtaining the intermediate and is contained as such in the intermediate.

In the case of manufacturing a sulfide solid electrolyte containing a halogen element, it is not essential that the starting material should contain the halogen element (Ha). Even in the case where the starting material does not contain the compound containing the halogen element, a sulfide solid electrolyte containing a halogen element may be produced, for example, by adding the compound containing the halogen element after the intermediate synthesis step, during the heating/melting step.

The lithium halides are also Li-containing compounds. In the case where the starting material contains a lithium halide, some or all of the Li in the starting material may be derived from the lithium halide.

In the case where the starting material contains a halogen element, the proportion of the Ha in terms of mole equivalent to the P in the starting material is preferably 0.2 mole equivalents or larger, more preferably 0.5 mole equivalents or larger, from the viewpoint of lowering the melting point in heating and melting the intermediate. Meanwhile, from the viewpoint of the stability of the sulfide solid electrolyte to be obtained, the proportion of the Ha in terms of mole equivalent is preferably 4 mole equivalents or smaller, more preferably 3 mole equivalents or smaller.

From the viewpoint of improving a glass-forming state of the sulfide solid electrolyte to be obtained, the starting material also preferably contains a sulfide such as SiS₂, B₂S₃, GeS₂, and Al₂S₃. By thus facilitating glass formation, a glass can be obtained through rapid cooling even at a reduced cooling rate, making it possible to reduce the burden to the equipment. Meanwhile, from the viewpoints of imparting moisture resistance to the sulfide solid electrolyte, etc., the starting material also preferably contains an oxide such as SiO₂, B₂O₃, GeO₂, and Al₂O₃. One of these compounds may be used alone or two or more thereof may be used in combination.

Those sulfides and oxides may be contained in the starting material, or may be contained in intermediate to be obtained from the starting material as components, or may be separately added in melting the intermediate.

The amount of those compounds to be added is preferably 0.1 wt% or larger, more preferably 0.5 wt% or larger, based on the whole amount of the starting material or the intermediate. Meanwhile, the amount of those compounds to be added is preferably 50 wt% or smaller, more preferably 40 wt% or smaller.

The starting material may contain a compound serving as a crystal nucleus that will be described later.

### (Heat Treatment in Intermediate Synthesis Step)

The starting material that includes a lithium element, a sulfur element, and a phosphorus element is heat-treated to obtain an intermediate. Specific methods for the heat treatment are not particularly limited, and examples thereof include a method in which the starting material is put in a heat-resistant vessel and heated in a heating oven. The heat-resistant vessel is not particularly limited, and examples thereof include a heat-resistant vessel made of carbon, a heat-resistant vessel including an oxide such as quartz, a quartz glass, a borosilicate glass, an aluminosilicate glass, alumina, zirconia, and mullite, a heat-resistant vessel including a nitride such as silicon nitride and boron nitride, and a heat-resistant vessel including a carbide such as a silicon carbide. The bulk of these heat-resistant vessels may be made of the material, or each of these heat-resistant vessels may be a vessel having a layer of carbon or an oxide, nitride, carbide, etc.

In the heat treatment in the intermediate synthesis step, the temperature to which the starting material is heated is preferably 250°C or higher, more preferably 255°C or higher, still more preferably 260°C or higher. Temperatures not below the lower limit are preferred because reactions for synthesizing the intermediate are apt to proceed. Meanwhile, the temperature is preferably 500°C or lower, more preferably 450°C or lower, still more preferably 400°C or lower. Temperatures not above the upper limit are preferred because low-boiling-point components, e.g., P₂S₅, in the starting material are inhibited from vaporizing and reactions for synthesizing the intermediate including compounds having a desired composition are apt to proceed.

It is preferred to hold the starting material at a temperature within the preferred range for a certain time period in order to obtain the intermediate by the heat treatment. The temperature at which the starting material is held is more preferably in a certain range. For example, the temperature is preferably within ±15°C, more preferably within ±10°C, with respect to a reference temperature.

The holding period is preferably 1 minute or longer, more preferably 5 minutes or longer, still more preferably 10 minutes or longer, yet still more preferably 15 minutes or longer, especially preferably 20 minutes or longer. In the case where the starting material is heated at the preferred temperature but held for an insufficient period, it is thought that the reactions are prone to proceed insufficiently and it is difficult to obtain an intermediate which brings the effects of this manufacturing method. Holding periods not shorter than 1 minute provide conditions under which the reactions proceed to obtain the intermediate, and are hence preferred. From the viewpoint of inhibiting low-boiling-point components, e.g., P₂S₅, in the starting material from vaporizing, the holding period is preferably 600 minutes or shorter, more preferably 500 minutes or shorter.

The holding period can be further shortened, for example, in the case where the starting material has undergone a given treatment. Examples of the treatment include treatments for enhancing reactivity between the particles included in the starting material, for example, by: reducing the particle size of the starting material; removing, as much as possible, a surface oxide layer of the particles included in the starting material by etching or other means, or modifying the surface oxide layer; making the particles porous; or regulating starting-material mixing conditions to improve the homogeneity of the starting material. In this case, the holding period is preferably 1 second or longer, more preferably 10 seconds or longer, still more preferably 20 seconds or longer. From the viewpoint of inhibiting low-boiling-point components, e.g., P₂S₅, in the starting material from vaporizing, the holding period is preferably 10 minutes or shorter, more preferably 5 minutes or shorter.

It is preferred to reduce the particle size of the starting material, from the viewpoint of shortening the holding period, i.e., from the viewpoint of shortening the reaction time in the intermediate synthesis step. In the case where the starting material has too large a particle size (D50), this may affect the homogeneity of the sulfide solid electrolyte. From this viewpoint also, the particle size thereof is preferably small to some degree. However, since this manufacturing method is excellent in terms of composition control, this manufacturing method can produce a more homogeneous sulfide solid electrolyte even when a starting material having a particle size which, for example, can be causative of a decrease in homogeneity in conventional manufacturing methods is used. From these viewpoints, the particle size (D50) of the starting material is specifically preferably 1 mm or smaller, more preferably 500 µm or smaller, still more preferably 250 µm or smaller, yet still more preferably 100 µm or smaller, especially preferably 50 µm or smaller.

The smaller the particle size, the more the starting material is preferred. However, a practical lower limit is about 0.1 µm. The particle size of the starting material is preferably 1 µm or larger, more preferably 5 µm or larger. As stated above, it is easy to obtain a homogeneous sulfide solid electrolyte by this manufacturing method even when a starting material having a relatively large particle size is used. In view of this, from the viewpoint of, for example, reducing the production cost, the particle size of the starting material may be regulated to preferably 10 µm or larger, more preferably 100 µm or larger, still more preferably 250 µm or larger.

As stated above, the starting material can be a mixture of a plurality of substances (compounds, etc.). The starting material may be in the form of a mixture of a plurality of substances differing in particle size each other. In this case, it is preferable that the particle size of each of the substances is within that range.

In this description, the term "particle size (D50) of a starting material" means a median diameter (D50) determined from a volume-based particle size distribution chart obtained by measuring the particle size distribution of the starting material with laser diffraction type particle size distribution analyzer MT3300EXII, manufactured by Microtrac Inc.

The heat treatment in the intermediate synthesis step is not particularly limited in pressure. For example, ordinary pressure to slightly higher pressures are preferred. Ordinary pressure is more preferred.

The heat treatment in the intermediate synthesis step is preferably conducted in an inert gas atmosphere in order to prevent side reactions between the starting material and water vapor, oxygen, etc. Specific examples include a N₂ gas, an argon gas, and a helium gas. The atmosphere has a dew point during the heat treatment of preferably -20°C or lower. There is no particular lower limit thereon, but the lower limit is usually about -80°C. The atmosphere preferably has an oxygen concentration of 1,000 ppm or less.

In the intermediate synthesis step, compounds included in the starting material and mixing ratios therebetween are regulated and conditions for the heat treatment are controlled. Thus, intermediates having different compositions according to purposes are obtained. The obtained intermediate may be used as such, without being taken out of the heat-resistant vessel, in the heating/melting step within the heating oven used for the intermediate synthesis, or may be taken out, after having been cooled to room temperature, and temporarily stored. A plurality of intermediates differing in composition which have been taken out and stored can be used in combination in the heating/melting step. In the heating/melting step, the amount of sulfur being introduced into the intermediate is controlled in an atmosphere of a gas including a sulfur element. This makes it easy to separately produce sulfide solid electrolytes differing in composition, property, and performance.

Examples of the composition of the intermediate obtained in this step include compounds including Li, P, and S, such as Li₄P₂S₆ and Li₃PS₄. From the viewpoint of controlling the amount of sulfur to be introduced into the intermediate in the atmosphere of a gas including a sulfur element in the heating/melting step, the intermediate preferably includes at least one of Li₄P₂S₆ and Li₃PS₄. This intermediate is preferred also from the viewpoint of the stability thereof during temporary storage, because Li₄P₂S₆ and Li₃PS₄ are thermodynamically stable.

The reactions occurring in the intermediate synthesis step are reactions typically characterized in that Li₂S and P₂S₅ included in the starting material begin to react with each other at about 250°C to form at least one of Li₄P₂S₆ and Li₃PS₄, although this depends on the composition of the desired sulfide solid electrolyte. In the reactions, a Li-containing substance (compound, etc.) and a P-containing substance (compound, etc.) which are precursors of Li₂S and P₂S₅, respectively, may be used for obtaining Li₂S and P₂S₅.

For essentially accelerating the reactions, it is preferred to enhance reactivity between the particles included in the starting material, for example, by: reducing the particle size of the starting material; removing, as much as possible, a surface oxide layer of the particles included in the starting material by etching or other means, or modifying the surface oxide layer; making the particles porous; or regulating starting-material mixing conditions to improve the homogeneity of the starting material. In particular, in the reactions, the particle size of Li₂S, with which P₂S₅ reacts first, is apt to affect the intermediate-forming reactions. Hence, from the viewpoint of accelerating the intermediate-forming reactions, it is preferred to reduce the particle size of either Li₂S or the Li-containing substance (compound, etc.) as a precursor of Li₂S. Reducing the surface crystallinity of Li₂S, a treatment for enlarging the surface area other than particle size reduction, etc. are also thought to be effective from that viewpoint. Furthermore, reacting Li₂S and P₂S₅ in an atmosphere of a gas including a sulfur element is also thought to contribute to acceleration of the intermediate-forming reactions.

In the case of manufacturing a sulfide solid electrolyte containing a halogen element, the intermediate preferably contains a compound containing the halogen element. In the case where the starting material includes a lithium halide, e.g., LiCl or LiBr, the intermediate obtained therefrom can contain the lithium halide because these compounds are less apt to change in composition in temperatures used for the heat treatment.

In this manufacturing method, the vaporization of the sulfur component and phosphorus component in the starting material can be inhibited by going through the intermediate synthesis step, as compared with the case where the desired sulfide solid electrolyte is obtained directly from the starting material. Because of this, compounds which give clear information on compositions including Li, P, and S, such as Li₄P₂S₆ and Li₃PS₄ can be synthesized as intermediates. These intermediates are thermodynamically stable and can hence be taken out after having been cooled to room temperature after the heat treatment for intermediate synthesis. The intermediates thus taken out can be subjected to compositional analysis, and a necessary amount of sulfur introduction in the heating/melting step can be determined. Furthermore, since an intermediate having a specific composition is produced from the starting material, conditions for the heating/melting can be more appropriately set in accordance with the composition of the intermediate. This makes it possible to appropriately control the amount of sulfur introduction in an atmosphere of a gas including a sulfur element, and hence a compositional difference is less apt to occur. Moreover, in the case where an intermediate which is more akin in composition to a desired sulfide solid electrolyte than to the starting material is obtained and then heated and melted, then the obtained sulfide solid electrolyte can be homogeneous in composition. In addition, in the case where a plurality of intermediates differing in composition are heated and melted in combination, then sulfide solid electrolytes differing in composition, property, and performance can be produced separately.

### [Heating/melting Step]

In the heating/melting step, the intermediate described above is heated and melted in an atmosphere of a gas including a sulfur element. According to need, the intermediate to be heated and melted in this step may be, for example, an intermediate composition including a plurality of intermediates mixed with each other or an intermediate composition including an intermediate and other substances (compounds, etc.) added thereto.

Specific methods for the heating/melting are not particularly limited. Examples thereof include a method in which the starting material is put in a heat-resistant vessel and heated in a heating oven. The heat-resistant vessel is not particularly limited, and examples thereof include a heat-resistant vessel made of carbon, a heat-resistant vessel including an oxide such as quartz, a quartz glass, a borosilicate glass, an aluminosilicate glass, alumina, zirconia, and mullite, a heat-resistant vessel including a nitride such as silicon nitride and boron nitride, and a heat-resistant vessel including a carbide such as a silicon carbide. The bulk of these heat-resistant vessels may be made of the material, or each of these heat-resistant vessels may be a vessel having a layer of carbon or an oxide, nitride, carbide, etc.

The heating/melting is conducted in an atmosphere of a gas including a sulfur element. The gas including a sulfur element is, for example, a gas including either a compound containing a sulfur element or elemental sulfur, such as a sulfur gas, a hydrogen sulfide gas, and a carbon disulfide gas.

The gas including a sulfur element may consist of gaseous compounds containing a sulfur element, such as a sulfur gas, a hydrogen sulfide gas and a carbon disulfide gas. Meanwhile, from the viewpoints of cost reduction, use as a carrier gas for conveying a sulfur component, etc., the gas including a sulfur element is also preferably one containing an inert gas such as a N₂ gas, an argon gas, and a helium gas. The gas including a sulfur element may contain impurities derived form a sulfur source, etc., so long as these impurities do not lessen the effect of this manufacturing method.

In the case where the gas including a sulfur element includes a sulfur gas, the content of the sulfur gas (Sₓ (x = 2 to 8)) in the gas including a sulfur element is preferably 0.01 vol% or higher, more preferably 0.1 vol% or higher, still more preferably 0.2 vol% or higher, from the viewpoints of making the sulfur element be contained in a sufficient amount and of causing a sulfur introduction reaction to proceed. Meanwhile, the content of the sulfur gas is 100 vol % or lower, and is preferably 99 vol% or lower, more preferably 98 vol% or lower, from the viewpoints of cost reduction and of using an inert gas as a carrier gas. The content of the sulfur gas (Sₓ (x = 2 to 8)) can be determined by mass spectrometry/gas chromatography.

The gas including a sulfur element is obtained by heating a sulfur source. The sulfur source hence is not particularly limited so long as it is elemental sulfur or a sulfur compound from which a gas including a sulfur element is obtained by heating. Examples thereof include elemental sulfur, hydrogen sulfide, organic sulfur compounds, e.g., carbon disulfide, iron sulfides (e.g., FeS, Fe₂S₃, FeS₂, and Fe₁₋ₓS), bismuth sulfide (Bi₂S₃), copper sulfides (e.g., CuS, Cu₂S, and Cu₁₋ₓS), polysulfides such as lithium polysulfides and sodium polysulfides, polysulfides, and rubbers which have undergone a vulcanization treatment with sulfur.

For example, any of these sulfur sources is heated in a separately disposed sulfur-source-heating part to generate a gas including a sulfur element, and this gas is conveyed to a heating/melting furnace using an inert gas, such as a N₂ gas, an argon gas, and a helium gas, as a carrier gas. Thus, the atmosphere of a gas including a sulfur element is obtained. In the case where disposing the sulfur-source-heating part separately from a portion where the heating/melting step is conducted, even if the gas to be introduced into the heating/melting furnace contains oxygen or water, the oxygen or water can be removed, before the gas is introduced into the furnace, by reaction with a sulfur gas. As a result, a high-purity sulfide solid electrolyte of good quality with low impurity contents can be obtained. Such disposition of the sulfur-source-heating part is hence preferred.

A temperature at which the sulfur source is heated may be suitably selected in accordance with the kind of the sulfur source used. For example, in the case of using elemental sulfur as the sulfur source, the heating temperature is preferably 250°C or higher, and is preferably 750°C or lower.

Alternatively, the atmosphere of a gas including a sulfur element may be obtained by conveying a solid sulfur source, e.g., elemental sulfur, H₂S, Bi₂S₃, an iron sulfide, a copper sulfide, or CS₂, among those sulfur sources in a fine state such as a powder, to the heating/melting furnace with a carrier-gas stream.

For example, the heating/melting step can be conducted in the following manner. In a configuration including a sulfur-source-heating part separated from a portion where the heating/melting step is conducted, a sulfur source is heated in the sulfur-source-heating part to generate a gas including a sulfur element. A gas including a sulfur element in an amount according to a necessary partial sulfur pressure is introduced into the portion where the heating/melting step is conducted, thereby obtaining an atmosphere of the gas including a sulfur element. In this atmosphere, an intermediate obtained from a starting material at least including a lithium element, a sulfur element, and a phosphorus element is heated and melted. In this heating/melting, the atmosphere of the gas including a sulfur element preferably has a partial sulfur pressure of 10⁻³ to 10⁰ atm.

A sulfur component, e.g., P₂S₅, which has vaporized in the intermediate synthesis step can be recovered and used as a sulfur source in this step. Specifically, for example, the vaporized sulfur component can be solidified by cooling and this solid can be used as the sulfur source.

From the viewpoints of production cost and of obtaining a desired sulfide solid electrolyte in high yield, this manufacturing method preferably further includes a step for recovering a sulfur-element-containing component which vaporizes from the starting material in the intermediate synthesis step, and a gas derived from the recovered sulfur-element-containing component is preferably used as at least some of the gas including a sulfur element in the heating/melting step.

By heating and melting the intermediate in the atmosphere of the gas including a sulfur element, sulfur is introduced into the melt of the intermediate. Thus, sulfur can be introduced in an amount sufficient for obtaining a sulfide solid electrolyte having a desired composition.

The introduction of sulfur into the intermediate which has been melted and is in a liquid-phase state is preferred because the time of a reaction for sulfur introduction can be shortened as compared with the time of a reaction in a solid-phase state. Furthermore, since the intermediate is in a liquid-phase state, it is easy to evenly introduce sulfur throughout the melt and the obtained sulfide solid electrolyte tends to have a homogeneous composition. The melt of the intermediate has a reduced viscosity due to the fluidization of the solid and is in a highly even state. Thus, the gas including a sulfur element is hence highly soluble and diffusible in the melt of the intermediate. Because of this, the effects of reacting the liquid-state intermediate whereby the reaction time is shortened and the composition is homogenized are more enhanced. Moreover, in the case where the heating/melting is conducted while the melt and the gas including a sulfur element are being stirred, those effects are more easily obtained. This method is hence more preferred.

The heating/melting is conducted at a temperature of preferably 600°C or higher, more preferably 630°C or higher, still more preferably 650°C or higher, from the viewpoint of heightening the flowability of the melt to cause the reaction for sulfur introduction to proceed. Meanwhile, from the viewpoints of inhibiting components of the melt from thermally deteriorating or decomposing, etc., the heating/melting is conducted at a temperature of preferably 900°C or lower, more preferably 850°C or lower, still more preferably 800°C or lower.

The period of the heating/melting is preferably 0.1 hour or longer, more preferably 0.5 hours or longer, still more preferably 0.7 hours or longer, yet still more preferably 1 hour or longer, from the viewpoint of causing the reaction for sulfur introduction to proceed. Meanwhile, from the viewpoints of inhibiting components of the melt from thermally deteriorating or decomposing, etc., the period of the heating/melting is preferably 10 hours or shorter, more preferably 9.5 hours or shorter, still more preferably 9 hours or shorter.

The heating/melting may be conducted as a continuous process. The term "continuous process" means a step in which the melt obtained by melting is caused to continuously flow down from the heat-resistant vessel. Either the intermediate or the starting material may be introduced. The introduction may be continuous or intermittent. In the case of conducting the heating/melting as a continuous process, the melt in the molten state may be held for a long period under appropriate conditions set in view of the progress of the reaction for sulfur introduction, the deterioration of components of the melt, etc. The long period may be, for example, about 24 hours.

The heating/melting is not particularly limited in pressure. For example, ordinary pressure to slightly higher pressures are preferred, and ordinary pressure is more preferred. It is also preferred to regulate the partial sulfur pressure to 10⁻³ to 10⁰ atm. Regulating the partial sulfur pressure to such a value prevents the apparatus from becoming complicated and enables low-cost efficient sulfur introduction, making it easy to obtain the desired sulfide solid electrolyte.

From the viewpoint of preventing side reactions with water vapor, oxygen, etc. during the heating/melting, the dew point is preferably -20°C or lower. Although there is no particular lower limit, a lower limit is usually about -80°C. The oxygen concentration is preferably 1,000 ppm or less.

### (Cooling Step)

This manufacturing method preferably further includes a step in which the melt obtained by the heating/melting is cooled to obtain a solid. The cooling may be conducted by a known method, which is not particularly limited.

From the viewpoint of maintaining a composition obtained by the heating/melting step, the cooling is conducted at a rate of preferably 0.01 °C/sec or higher, more preferably 0.05 °C/sec or higher, still more preferably 0.1 °C/sec or higher. There is no particular upper limit on cooling rate. However, cooling with a twin roller, which is generally said to be highest in cooling rate, has a cooling rate of 1,000,000 °C/sec or lower.

In the case where the solid to be obtained is desired to be an amorphous sulfide solid electrolyte, it is preferred to obtain the solid by rapidly cooling the melt obtained by the heating/melting. Specifically, the cooling rate in the case of rapid cooling is preferably 10 °C/sec or higher, more preferably 100 °C/sec or higher, still more preferably 500 °C/sec or higher, yet still more preferably 700 °C/sec or higher. There is no particular upper limit on cooling rate. However, cooling with a twin roller, which is generally said to be highest in cooling rate, has a cooling rate of 1,000,000 °C/sec or lower.

Meanwhile, the melt may be gradually cooled in the cooling step to obtain a solid, at least some of which has been crystallized. Thus, a sulfide solid electrolyte having a specific crystal structure or a sulfide solid electrolyte configured of a crystalline phase and an amorphous phase can be obtained. The cooling rate in the case of gradual cooling is preferably 0.01 °C/sec or higher, more preferably 0.05 °C/sec or higher. Meanwhile, the cooling rate is preferably 500 °C/sec or lower, more preferably 450 °C/sec or lower. The cooling rate may be below 10 °C/sec, or may be 5 °C/sec or lower. The cooling rate may be suitably regulated in accordance with conditions for crystallization.

The crystals contained in the sulfide solid electrolyte are preferably ion-conductive crystals. The ion-conductive crystals, specifically, are crystals having a lithium-ion conductivity higher than 10⁻⁴ S/cm, more preferably higher than 10⁻³ S/cm.

In the case where the solid to be obtained through cooling is desired to be a sulfide solid electrolyte including a crystalline phase, it is preferable that the melt obtained in the heating/melting step contain a compound serving as a crystal nucleus. This renders crystals apt to separate out in the cooling step. Methods for making the melt contain a compound serving as a crystal nucleus are not particularly limited, and examples thereof include a method in which the compound serving as a crystal nucleus is added to the starting material or the intermediate and a method in which the compound serving as a crystal nucleus is added to the melt which is being heated and melted.

Examples of the compound serving as a crystal nucleus include oxides, oxynitrides, nitrides, carbides, other chalcogen compounds, and halides. The compound serving as a crystal nucleus is preferably a compound which is compatible with the melt to some degree. Any compound not compatible with the melt at all cannot serve as a crystal nucleus.

In the case where the solid to be obtained through cooling is desired to be a sulfide solid electrolyte including a crystalline phase, the content of the compound serving as a crystal nucleus in the melt is preferably 0.01 mass% or higher, more preferably 0.1 mass% or higher, still more preferably 1 mass% or higher. Meanwhile, from the viewpoint of inhibiting the lithium-ion conductivity from decreasing, the content of the compound serving as a crystal nucleus in the melt is preferably 20 mass% or lower, more preferably 10 mass% or lower.

In the case where the solid to be obtained through cooling is desired to be an amorphous sulfide solid electrolyte, it is preferable that the melt contain no compound serving as a crystal nucleus or that the content of the compound in the melt be a given amount of less. Specifically, the content of the compound serving as a crystal nucleus in the melt is preferably 1 mass% or lower, more preferably 0.1 mass% or lower. The content of the compound serving as a crystal nucleus in the melt may be below 0.01 mass%.

### (Reheating Step)

An amorphous sulfide solid electrolyte or a sulfide solid electrolyte including an amorphous phase can be made to undergo accelerated high-temperature crystallization by subjecting the solid electrolyte to a heat treatment (post annealing). In the case where the solid obtained in the cooling step is an amorphous sulfide solid electrolyte or a sulfide solid electrolyte including an amorphous phase, this manufacturing method may further include subjecting the solid to a heat treatment again. The reheating treatment of a sulfide solid electrolyte including sulfide solid-electrolyte crystals can rearrange the ions within the crystal structure to heighten the lithium-ion conductivity. The reheating treatment in this step is at least one of subjecting the solid obtained by cooling in the cooling step to a heat treatment for crystallization and rearranging the ions within the crystal structure. Hereinafter, the heat treatment of either the amorphous sulfide solid electrolyte or the sulfide solid electrolyte including an amorphous phase and the crystallization treatment are inclusively referred to as a reheating treatment.

By controlling the temperature for the reheating treatment and the period thereof, the proportions of the amorphous phase and crystalline phase can be controlled and the lithium-ion conductivity can be controlled accordingly. The control of the temperature and the period is hence preferred. For heightening the lithium-ion conductivity, it is preferred to increase the proportion of the crystalline phase. Specifically, the proportion of the crystalline phase is preferably 10 mass% or higher, more preferably 20 mass% or higher. From the viewpoint of mechanical strength, the proportion of the crystalline phase is preferably 99.9 mass% or lower, more preferably 99 mass% or lower. The proportion of the crystalline phase can be determined by X-ray diffractometry (XRD).

Specific conditions for the reheating treatment may be regulated in accordance with the composition of the sulfide solid electrolyte, etc., and are not particularly limited. The reheating treatment is preferably conducted in an inert gas atmosphere such as a N₂ gas, an argon gas, and a helium gas. The reheating treatment may be conducted in an atmosphere of a gas including a sulfur element.

For example, the temperature for the reheating treatment is preferably not lower than a glass transition temperature of the sulfide solid electrolyte. Specifically, the temperature is preferably 200°C or higher, more preferably 250°C or higher. Meanwhile, there is no particular upper limit on the temperature so long as the sulfide solid electrolyte is neither deteriorated nor decomposed by the heating. For example, the temperature is preferably 550°C or lower, more preferably 500°C or lower.

The period of the reheating treatment is preferably 0.1 hour or longer, more preferably 0.2 hours or longer, from the viewpoint of more reliable crystal precipitation. From the viewpoint of inhibiting thermal deterioration due to the heating, the period of the reheating treatment is preferably 3 hours or shorter, more preferably 2 hours or shorter.

This manufacturing method may include, for example, a step for pulverizing the sulfide solid electrolyte obtained through the steps described above and a step for drying the solid electrolyte, in accordance with uses of the sulfide solid electrolyte to be obtained, etc. These steps each are not particularly limited in specific methods therefor, and may be conducted by known methods.

### <Sulfide solid electrolyte>

This manufacturing method is excellent in terms of composition control since the kinds of the starting material and the intermediate and the mixing ratio can be regulated and since the method includes obtaining the intermediate and heating and melting the intermediate in an atmosphere of a gas including a sulfur element. Because of this, various sulfide solid electrolytes can be produced by this manufacturing method. Examples of the sulfide solid electrolyte to be obtained by this manufacturing method include sulfide solid electrolytes having an LGPS crystal structure, e.g., Li₁₀GeP₂S₁₂, sulfide solid electrolytes having an argyrodite crystal structure, e.g., Li₆PS₅Cl, Li_{5.4}PS_{4.4}Cl_{1.6}, and Li_{5.4}PS_{4.4}Cl_{0.8}Br_{0.8}, crystallized glasses based on Li-P-S-Ha (Ha represents at least one element selected from among halogen elements), and LPS crystallized glasses, e.g., Li₇P₃S₁₁.

The sulfide solid electrolyte may be an amorphous solid electrolyte, or may be a sulfide solid electrolyte having a specific crystal structure, or may be a sulfide solid electrolyte including a crystalline phase and an amorphous phase, in accordance with purposes.

In the case where the sulfide solid electrolyte includes a crystalline phase, the crystals contained in the sulfide solid electrolyte are preferably ion-conductive crystals. Ion-conductive crystals specifically are crystals having a lithium-ion conductivity higher than 10⁻⁴ S/cm, more preferably higher than 10⁻³ S/cm. From the viewpoint of lithium-ion conductivity, the crystalline phase is more preferably an argyrodite crystalline phase.

Preferred as the sulfide solid electrolyte having excellent lithium-ion conductivity is a sulfide solid electrolyte having an argyrodite crystal structure. In the case where a sulfide solid electrolyte having an argyrodite crystal structure is the desired compound to be produced, it is preferable that at least one of the starting material for this manufacturing method and the intermediate for this manufacturing method contain a halogen element. This halogen element is preferably derived from one or more compounds selected from the group consisting of lithium chloride, lithium bromide, and lithium iodide.

The sulfide solid electrolyte obtained can be identified by analysis for crystal structure by X-ray diffractometry (XRD) and analysis for elemental composition by any of various methods including ICP emission spectrometry, atomic absorption spectrometry, and ion chromatography. For example, P and S can be determined by ICP emission spectrometry, Li can be determined by atomic absorption spectrometry, and Cl can be determined by ion chromatography.

By Raman spectroscopy, a sulfide solid electrolyte can be evaluated for homogeneity in composition. Specifically, a sample taken out of the obtained sulfide solid electrolyte is tested by examining arbitrarily selected two or more portions thereof by Raman spectroscopy. From the viewpoint of heightening the accuracy of the evaluation, the number of the test portions is preferably 8 or larger, more preferably 10 or larger.

Examples of preferred conditions for Raman spectroscopy in evaluating the sulfide solid electrolyte for homogeneity in composition include a spot diameter of 3 µm and the number of the test portions of 10. In the case where the spot diameter is 3 µm, each area to be analyzed by Raman spectroscopy has a size suitable for evaluating the compositional homogeneity of the sulfide solid electrolyte on a micro level.

The lower the unevenness in the wavenumber (position) of a peak derived from a structure, e.g., PS₄³⁻, in the sulfide solid electrolyte in the results of the examinations, the more the composition of the sulfide solid electrolyte is thought to be homogeneous. Alternatively, the lower the unevenness in the full width at half maximum of the peak derived from a structure in the sulfide solid electrolyte, the more the composition of the sulfide solid electrolyte is thought to be homogeneous.

It is preferred to examine a peak derived from PS₄³⁻ as the peak derived from a structure in the sulfide solid electrolyte, although this depends on the composition of the sulfide solid electrolyte obtained.

The position of the peak derived from PS₄³⁻ varies depending on composition systems. Typically, however, the peak derived from PS₄³⁻ is a peak derived from a P-S bond appearing in the range of 350 cm⁻¹ to 500 cm⁻¹. For example, in the case of the sulfide solid electrolyte having an argyrodite crystal structure, that peak appears in the range of 420 to 430 cm⁻¹. Hereinafter, the term "unevenness in peak position" or "unevenness in peak full width at half maximum" in this description means unevenness determined through examination of the peak derived from PS₄³⁻.

The unevenness in peak position can be evaluated in the following manner. A standard deviation of peak positions obtained for the respective test portions by Raman spectroscopy is determined. In the case where this is expressed by (average of peak positions)±(standard deviation), the standard deviation value is preferably 2 cm⁻¹ or less, more preferably 1 cm⁻¹ or less, still more preferably 0.5 cm⁻¹ or less. The term "peak position" herein means the position of a peak top.

For example, in the case where a sulfide solid electrolyte obtained by this manufacturing method is examined by Raman spectroscopy under the conditions of a spot diameter of 3 µm and the number of test portions of 10, the standard deviation of the positions of P-S-bond-derived peaks in the range of 350 cm⁻¹ to 500 cm⁻¹ for the respective test portions is preferably 2 cm⁻¹ or less, more preferably 1 cm⁻¹ or less, still more preferably 0.5 cm⁻¹ or less.

The unevenness in peak full width at half maximum can be evaluated in the following manner. A standard deviation of peak full widths at half maximum obtained for the respective test portions by Raman spectroscopy is calculated by determining the full width at half maximum of each peak and determining a standard deviation of these values. In the case where this is expressed by (average of peak full widths at half maximum)±(standard deviation), the standard deviation value is preferably 2 cm⁻¹ or less, more preferably 1.5 cm⁻¹ or less. The term "full width at half maximum of a peak" herein means the width of the peak derived from a P-S bond in a Raman spectrum, the width being measured at the points where a line indicating a half value of the peak intensity crosses the peak derived from a P-S bond.

For example, in the case where a sulfide solid electrolyte obtained by this manufacturing method is examined by Raman spectroscopy under the conditions of a spot diameter of 3 µm and the number of test portions of 10, the standard deviation of the full widths at half maximum of P-S-bond-derived peaks in the range of 350 cm⁻¹ to 500 cm⁻¹ for the respective test portions is preferably 2 cm⁻¹ or less, more preferably 1.5 cm⁻¹ or less.

The lithium-ion conductivity of the obtained sulfide solid electrolyte is preferably 1.0×10⁻³ S/cm or higher, more preferably 3.0×10⁻³ S/cm or higher, still more preferably 5.0×10⁻³ S/cm or higher, from the viewpoint of enabling lithium-ion secondary batteries employing this solid electrolyte to have satisfactory battery characteristics.

### EXAMPLES

The present invention is explained in detail below by reference to Examples, but the present invention is not limited to the Examples. Examples 1 and 5 are Inventive Examples according to this manufacturing method, and Examples 2 to 4 are Comparative Examples.

The particle sizes of the substances used as starting materials in Examples are as follows. In Examples 1 to 3, use was made of Li₂S, P₂S₅, and LiCl having particle sizes (D50) of 5 µm, 10 µm, and 50 µm, respectively. In Examples 4 and 5, the same starting-material substances were used, except for Li₂S which had a particle size (D50) of 100 µm.

### [Example 1: Synthesis of Li_{5.4}PS_{4.4}Cl_{1.6}]

### (Intermediate Synthesis Step)

Starting-material powders of Li₂S, P₂S₅, and LiCl were mixed together in a ratio of 1.9:0.5:1.6 (by mole). Thirty grams of this starting-material powder mixture was put in a heat-resistant vessel, which was then introduced into a test furnace and held in a nitrogen atmosphere with a dew point of -50°C under the conditions of a pressure of 1 atm and a temperature of 300°C (heating rate, 5 °C/min) for 0.5 hours to thereby heat-treat the starting-material powder mixture. Thus, an intermediate was obtained.

The obtained intermediate was examined by XRD (apparatus name: SmartLab, manufactured by Rigaku Corp.). As a result, no peak derived from P₂S₅ crystals was observed. Meanwhile, compositional analyses revealed that the intermediate had a composition represented by Li_{5.47}PS_{4.08}Cl_{1.62}, in which the proportion of P element was taken as 1. The compositional analyses were ICP emission spectrometry for P and S, atomic absorption spectrometry for Li, and ion chromatography for Cl.

### (Heating/melting Step)

The obtained intermediate was put in a heat-resistant vessel and heated and melted for 0.5 hours under the conditions of a pressure of 1 atm and a temperature of 730°C. In this treatment, a sulfur gas obtained by heating elemental sulfur at a temperature of 350°C was supplied, together with N₂ as a carrier gas, so as to result in a partial sulfur gas pressure of 0.1 atm. A gas atmosphere containing a sulfur element was thus obtained, and the heating/melting was conducted in this gas atmosphere, thereby introducing sulfur into a melt. The gas atmosphere containing a sulfur element had a content of the sulfur gas of 0.1 vol%.

### (Cooling Step)

Thereafter, a melt was cooled at a cooling rate of 10 to 1,000 °C/sec, thereby obtaining a solid as a sulfide solid electrolyte including an amorphous phase and an argyrodite crystalline phase.

### (Reheating Step)

Next, the solid was subjected to a reheating treatment at 450°C for 1 hour in a nitrogen gas atmosphere to cause crystallization. Thus, Li_{5.4}PS_{4.4}Cl_{1.6} was obtained as a sulfide solid electrolyte having an argyrodite crystal structure and having a crystallin-phase content of 90 vol% or higher. The obtained sulfide solid electrolyte was pulverized with a mortar to obtain a powder having a D50 of about 10 µm.

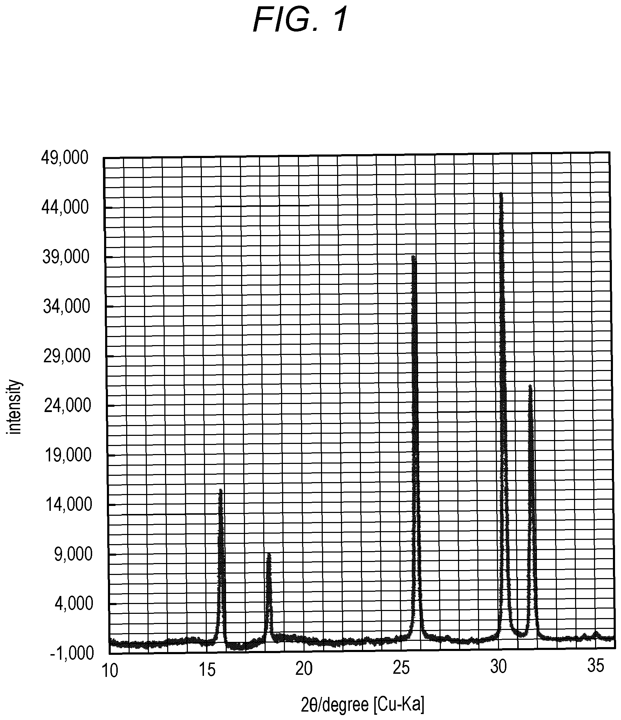

The sulfide solid electrolyte powder obtained by the pulverization was subjected as a sample to the compositional analyses as in the intermediate synthesis step. As a result, the powder was found to have a composition represented by Li_{5.43}PS_{4.38}Cl_{1.59}, in which the proportion of P element was taken as 1. The crystalline phase was identified by XRD (apparatus name: SmartLab, manufactured by Rigaku Corp.). The examination by XRD revealed that the crystalline phase was a single-component phase configured of argyrodite crystals. The results of the XRD examination of the sulfide solid electrolyte of Example 1 are shown in FIG. 1.

### (Evaluation of Homogeneity)

An examination by Raman spectroscopy (apparatus name: LabRAM HR Evolution, manufactured by Horiba Ltd.) was further conducted to evaluate the homogeneity of the obtained sulfide solid electrolyte. In the examination, a specimen obtained by forming the obtained sample powder into a pellet shape having a diameter of 1 cm was used and arbitrarily selected ten portions thereof were analyzed. A Raman-band (420 to 430 cm⁻¹) peak derived from (PS₄)³⁻ derived from the argyrodite crystal structure was used as an index to unevenness, and the unevenness of the peak wavenumbers for the ten test portions was evaluated in terms of (average of peak positions)±(standard deviation). The average of peak positions is an average of the wavenumbers of the spectrum peaks. The smaller the absolute value of the standard deviation in (average of peak positions)±(standard deviation), the lower the unevenness in peak wavenumber (peak position).

The examination by Raman spectroscopy was conducted in an environment free from atmospheric exposure. The examination conditions were as follows: excitation wavelength, 532 nm; power for sample irradiation, 5 mW; objective lens, 10 magnifications; numerical aperture, 0.25; confocal-point pinhole, 200 µm; grating, 1,200 gr/mm; examination period, 3 sec × 10 times; spot diameter, about 3 µm. The examination was conducted while the specimen was kept unexposed to the atmosphere.

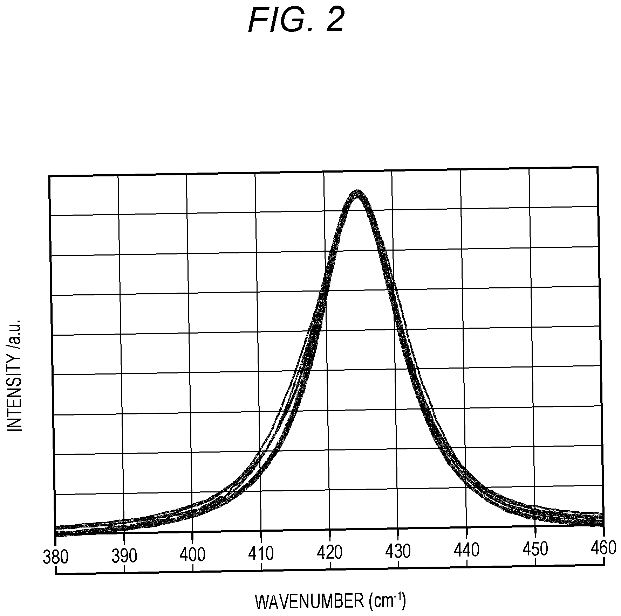

The value of (average of peak positions)±(standard deviation) of Example 1 was 428.1±0.0 cm⁻¹. The results of the examination of the sulfide solid electrolyte of Example 1 by Raman spectroscopy are shown in Table 1 and FIG. 2. FIG. 2 is a diagram showing Raman spectra for the ten test portions, the spectra having been superimposed on each other and normalized with respect to intensity as ordinate for an easy understanding of peak-position unevenness.

### (Evaluation of Lithium-ion Conductivity)

The lithium-ion conductivity was measured at 25°C by an AC impedance method (1260A Impedance Analyzer, manufactured by Solartron Analytical; measuring frequency, 7 MHz to 20 Hz). The lithium-ion conductivity was found to be 6.2×10⁻³ S/cm at 25°C. The results of the measurement are shown in Table 1.

### [Example 2: Synthesis of Li_{5.4}PS_{4.4}Cl_{1.6}]

### (Intermediate Synthesis Step)

Starting-material powders of Li₂S, P₂S₅, and LiCl were mixed together in a ratio of 1.9:0.5: 1.6 (by mole). Thirty grams of this starting-material powder mixture was put in a heat-resistant vessel, which was then introduced into a test furnace and held in a nitrogen atmosphere with a dew point of -50°C under the conditions of a pressure of 1 atm and a temperature of 300°C (heating rate, 5 °C/min) for 0.5 hours to thereby heat-treat the starting-material powder mixture. Thus, an intermediate was obtained.

The obtained intermediate was examined by XRD (apparatus name: SmartLab, manufactured by Rigaku Corp.). As a result, no peak derived from P₂S₅ crystals was observed. Furthermore, compositional analyses were conducted in the same manner as in Example 1 and, as a result, the intermediate was found to have a composition represented by Li_{5.47}PS_{4.08}Cl_{1.62}, in which the proportion of P element was taken as 1.

### (Heating/melting Step)

The obtained intermediate was put in a heat-resistant vessel and heated and melted for 0.5 hours under the conditions of a pressure of 1 atm and a temperature of 730°C.

### (Cooling Step)

Thereafter, a melt was cooled at a cooling rate of 10 to 1,000 °C/sec, thereby obtaining a solid as a sulfide solid electrolyte including an amorphous phase, an argyrodite crystalline phase, and an impurity phase.

### (Reheating Step)

Next, the solid was subjected to a reheating treatment at 450°C for 1 hour in a nitrogen gas atmosphere. The obtained sulfide solid electrolyte was pulverized with a mortar to obtain a powder having a D50 of about 10 µm.

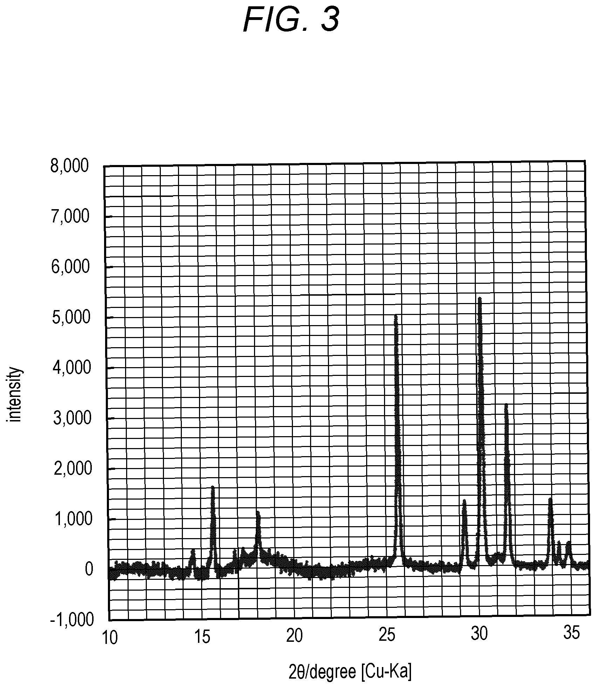

The sulfide solid electrolyte powder obtained by the pulverization was subjected to compositional analyses and an examination by XRD in the same manner as in Example 1. The powder was found to have a composition represented by Li_{5.33}PS_{3.88}Cl_{1.65}, in which the proportion of P element was taken as 1. The results of the XRD examination of the sulfide solid electrolyte of Example 2 are shown in FIG. 3.

### (Evaluation of Homogeneity)

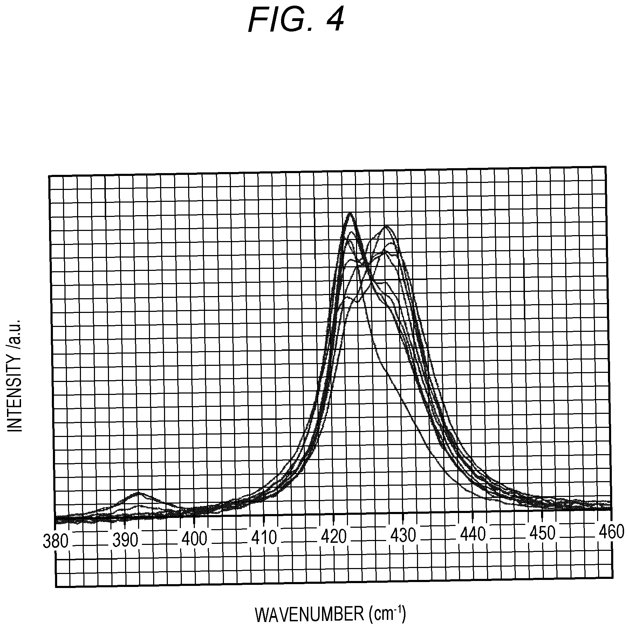

An examination by Raman spectroscopy was further conducted in the same manner as in Example 1 to evaluate the homogeneity of the obtained sulfide solid electrolyte. The value of (average of peak positions)±(standard deviation) of Example 2 was 425.2±3.0cm⁻¹. The results of the examination of the sulfide solid electrolyte of Example 2 by Raman spectroscopy are shown in Table 1 and FIG. 4. FIG. 4 is a diagram showing Raman spectra for the ten test portions, the spectra having been superimposed on each other and normalized with respect to intensity as ordinate for an easy understanding of peak-position unevenness.

### (Evaluation of Lithium-ion Conductivity)

The lithium-ion conductivity was measured at 25°C by an AC impedance method in the same manner as in Example 1. The lithium-ion conductivity was found to be 0.4×10⁻³ S/cm at 25°C. The results of the measurement are shown in Table 1.

### [Example 3: Synthesis of Li_{5.4}PS_{4.4}Cl_{1.6}]

### (Heating/melting Step)

Starting-material powders of Li₂S, P₂S₅, and LiCl were mixed together in a ratio of 1.9:0.5: 1.6 (by mole). Thirty grams of this starting-material powder mixture was put in a heat-resistant vessel, which was then introduced into a test furnace. Three grams of a sulfur powder was added to the vessel. Thereafter, the contents of the vessel were heated and melted for 0.5 hours in a nitrogen atmosphere with a dew point of -50°C under the conditions of a pressure of 1 atm and a temperature of 950°C (heating rate, 30 °C/min).

### (Cooling Step)

Thereafter, a melt was cooled at a cooling rate of 10 to 1,000 °C/sec, thereby obtaining a solid as a sulfide solid electrolyte including an amorphous phase, an argyrodite crystalline phase, and an impurity phase.

### (Reheating Step)

Next, the solid was subjected to a reheating treatment at 450°C for 1 hour in a nitrogen gas atmosphere. The obtained sulfide solid electrolyte was pulverized with a mortar to obtain a powder having a D50 of about 10 µm.

The sulfide solid electrolyte powder obtained by the pulverization was subjected to compositional analyses. As a result, the powder was found to have a composition represented by Li_{5.93}PS_{4.23}Cl_{1.78}, in which the proportion of P element was taken as 1.

### (Evaluation of Homogeneity, Evaluation of Lithium-ion Conductivity)

An examination by Raman spectroscopy was further conducted in the same manner as in Example 1 to evaluate the homogeneity of the obtained sulfide solid electrolyte. The value of (average of peak positions)±(standard deviation) of Example 3 was 425.0±2.4 cm⁻¹.

The lithium-ion conductivity was measured at 25°C by an AC impedance method in the same manner as in Example 1. The lithium-ion conductivity was found to be 0.6×10⁻³ S/cm at 25°C.

### [Example 4: Synthesis of Li_{5.4}PS_{4.4}Cl_{1.6}]

### (Heating/melting Step)

Starting-material powders of Li₂S, P₂S₅, and LiCl were mixed together in a ratio of 1.9:0.5: 1.6 (by mole). Thirty grams of this starting-material powder mixture was put in a heat-resistant vessel, which was then introduced into a test furnace. Three grams of a sulfur powder was added to the vessel. Thereafter, the contents of the vessel were heated and melted for 0.5 hours in a nitrogen atmosphere with a dew point of -50°C under the conditions of a pressure of 1 atm and a temperature of 750°C (heating rate, 30 °C/min).

### (Cooling Step)

Thereafter, a melt was cooled at a cooling rate of 10 to 1,000 °C/sec, thereby obtaining a solid as a sulfide solid electrolyte including an amorphous phase, an argyrodite crystalline phase, and an impurity phase.

### (Reheating Step)

Next, the solid was subjected to a reheating treatment at 450°C for 1 hour in a nitrogen gas atmosphere. The obtained sulfide solid electrolyte was pulverized with a mortar to obtain a powder having a D50 of about 10 µm.

The sulfide solid electrolyte powder obtained by the pulverization was subjected to compositional analyses. As a result, the powder was found to have a composition represented by Li_{5.73}PS_{4.52}Cl_{1.72}, in which the proportion of P element was taken as 1.

### (Evaluation of Homogeneity, Evaluation of Lithium-ion Conductivity)

An examination by Raman spectroscopy was further conducted in the same manner as in Example 1 to evaluate the homogeneity of the obtained sulfide solid electrolyte. The value of (average of peak positions)±(standard deviation) of Example 4 was 425.5±3.4 cm⁻¹.

The lithium-ion conductivity was measured at 25°C by an AC impedance method in the same manner as in Example 1. The lithium-ion conductivity was found to be 0.8×10⁻³ S/cm at 25°C.

### [Example 5: Synthesis of Li_{5.4}PS_{4.4}Cl_{1.6}]

### (Intermediate Synthesis Step)

Starting-material powders of Li₂S, P₂S₅, and LiCl were mixed together in a ratio of 1.9:0.5:1.6 (by mole). Thirty grams of this starting-material powder mixture was put in a heat-resistant vessel, which was then introduced into a test furnace and held in a nitrogen atmosphere with a dew point of -50°C under the conditions of a pressure of 1 atm and a temperature of 300°C (heating rate, 5 °C/min) for 0.5 hours to thereby heat-treat the starting-material powder mixture. Thus, an intermediate was obtained.

### (Heating/melting Step)

The obtained intermediate was put in a heat-resistant vessel and heated and melted for 0.5 hours under the conditions of a pressure of 1 atm and a temperature of 750°C. In this treatment, a sulfur gas obtained by heating elemental sulfur at a temperature of 350°C was supplied, together with N₂ as a carrier gas, so as to result in a partial sulfur gas pressure of 0.1 atm. A gas atmosphere containing a sulfur element was thus obtained, and the heating/melting was conducted in this gas atmosphere, thereby introducing sulfur into a melt. The gas atmosphere containing a sulfur element had a content of the sulfur gas of 0.1 vol%.

### (Cooling Step)

Thereafter, the melt was cooled at a cooling rate of 10 to 1,000 °C/sec, thereby obtaining a solid as a sulfide solid electrolyte including an amorphous phase and an argyrodite crystalline phase.

### (Reheating Step)

Next, the solid was subjected to a reheating treatment at 450°C for 1 hour in a nitrogen gas atmosphere. The obtained sulfide solid electrolyte was pulverized with a mortar to obtain a powder having a D50 of about 10 µm.

The sulfide solid electrolyte powder obtained by the pulverization was subjected to compositional analyses. As a result, the powder was found to have a composition represented by Li_{5.47}PS_{4.32}Cl_{1.62}, in which the proportion of P element was taken as 1.

### (Evaluation of Homogeneity, Evaluation of Lithium-ion Conductivity)

An examination by Raman spectroscopy was further conducted in the same manner as in Example 1 to evaluate the homogeneity of the obtained sulfide solid electrolyte. The value of (average of peak positions)±(standard deviation) of Example 5 was 429.6±0.5 cm⁻¹.

The lithium-ion conductivity was measured at 25°C by an AC impedance method in the same manner as in Example 1. The lithium-ion conductivity was found to be 5.8×10⁻³ S/cm at 25°C.

In Table 1 are shown the compositions of the sulfide solid electrolytes of Examples 1 to 5, the results of the lithium-ion conductivity evaluation thereof, and the results of the homogeneity evaluation thereof. The results of homogeneity evaluation shown in Table 1 are (average of peak positions)±(standard deviation) and (average of peak full widths at half maximum)±(standard deviation).

**Table 1**

| | Lithium-ion conductivity (25°C) | Composition (normalized with P=1) | Homogeneity evaluation [(average of peak positions)±(standard deviation)] | Homogeneity evaluation [(average of peak full widths at half maximum)±(standard deviation)] |
|---|---|---|---|---|
| Example 1 | 6.2 mS/cm | Li_{5.43}PS_{4.38}Cl_{1.59} | 428.1±0.0 cm⁻¹ | 13.5±0.8 cm⁻¹ |
| Example 2 | 0.4 mS/cm | Li_{5.33}PS_{3.88}Cl_{1.65} | 425.2±3.0 cm⁻¹ | 15.4±2.4 cm⁻¹ |
| Example 3 | 0.6 mS/cm | Li_{5.93}PS_{4.23}Cl_{1.78} | 425.0±2.4 cm⁻¹ | 17.7±3.3 cm⁻¹ |
| Example 4 | 0.8 mS/cm | Li_{5.73}PS_{4.52}Cl_{1.72} | 425.5±3.4 cm⁻¹ | 17.9±5.1 cm⁻¹ |
| Example 5 | 5.8 mS/cm | Li_{5.47}PS_{4.32}Cl_{1.62} | 429.6±0.5 cm⁻¹ | 14.4±1.3 cm⁻¹ |

In Examples 1 and 5 that are Inventive Examples, argyrodite crystals were able to be obtained as highly homogeneous sulfide solid electrolytes which showed low unevenness in Raman-spectrum peak wavenumber (peak position) and peak full width at half maximum in the homogeneity evaluation. These sulfide solid electrolytes were also high in lithium-ion conductivity. Meanwhile, Examples 2 to 4 that are Comparative Examples only gave lowly homogeneous sulfide solid electrolytes, and these sulfide solid electrolytes were also low in lithium-ion conductivity.

It is known that the particle sizes (D50) of solid electrolytes for use in, for example, all-solid-state lithium-ion secondary batteries are generally 1 to 5 µm. The Raman-spectrum analysis area in the homogeneity evaluation described above corresponds to a size equal to or slightly larger than one particle having such a particle size. That is, the results of the comparison among the measured values for the test portions in the homogeneity evaluation are regarded as results of a comparison among values obtained by examining areas each corresponding approximately to one particle of a desired solid-electrolyte powder.

Consequently, that the measured values for the test portions have low unevenness means that a solid-electrolyte powder obtained by pulverization is also homogeneous on a micrometer level, namely, that the particles constituting the solid-electrolyte powder are more even in composition. Because of this, the sulfide solid electrolyte of the present invention has excellent lithium-ion conductivity and is thought to be capable of improving the battery characteristics when used in all-solid-state lithium-ion secondary batteries.

Meanwhile, in the case where a solid-electrolyte powder is a mass of particles that are uneven, this solid-electrolyte powder more or less includes particles inferior in lithium-ion conductivity. Such particles are thought to be unable to satisfactorily conduct lithium ions when in contact with an active material or other solid-electrolyte particles.

While the invention has been described in detail and with reference to specific embodiments thereof, it will be apparent to one skilled in the art that various changes and modifications can be made therein without departing from the spirit and scope thereof. This application is based on a Japanese patent application filed on July 31, 2020 (Application No. 2020-130799), the contents thereof being incorporated herein by reference.

## Claims

1. A manufacturing method of a sulfide solid electrolyte, comprising:
heat-treating a starting material comprising a lithium element, a sulfur element, and a phosphorous element to obtain an intermediate; and
heating and melting the intermediate in an atmosphere of a gas comprising a sulfur element.

2. The manufacturing method of a sulfide solid electrolyte according to claim 1, wherein in the heat treatment, the starting material is heated at a temperature in a range of 250°C to 500°C.

3. The manufacturing method of a sulfide solid electrolyte according to claim 1 or 2, further comprising recovering a sulfur-element-containing component that vaporizes from the starting material in obtaining the intermediate,
wherein a gas derived from the sulfur-element-containing component is used as at least some of the gas comprising the sulfur element.

4. The manufacturing method of a sulfide solid electrolyte according to any one of claims 1 to 3, wherein the starting material comprises one or more substances selected from the group consisting of a metallic lithium, a lithium sulfide, a lithium carbonate, a lithium sulfate, a lithium oxide, and a lithium hydroxide.

5. The manufacturing method of a sulfide solid electrolyte according to any one of claims 1 to 4, wherein the intermediate comprises at least one of Li₄P₂S₆ and Li₃PS₄.

6. The manufacturing method of a sulfide solid electrolyte according to any one of claims 1 to 5, wherein the starting material further comprises a halogen element.

7. The manufacturing method of a sulfide solid electrolyte according to any one of claims 1 to 6, wherein the starting material comprises one or more compounds selected from the group consisting of a lithium chloride, a lithium bromide, and a lithium iodide.

8. The manufacturing method of a sulfide solid electrolyte according to any one of claims 1 to 7, wherein the sulfide solid electrolyte to be obtained has an argyrodite crystal structure.

9. The manufacturing method of a sulfide solid electrolyte according to any one of claims 1 to 8, further comprising cooling a melt obtained by the heating and melting to obtain a solid,
wherein the melt comprises 0.01 mass% or more of a compound serving as a crystal nucleus and
the solid is a sulfide solid electrolyte comprising a crystalline phase.

10. The manufacturing method of a sulfide solid electrolyte according to any one of claims 1 to 8, further comprising rapidly cooling a melt obtained by the heating and melting to obtain a solid.

11. The manufacturing method of a sulfide solid electrolyte according to claim 10, wherein the rapid cooling is conducted at a cooling rate of 10 °C/sec or higher and
the melt has a content of a compound serving as a crystal nucleus of 1 mass% or less.

12. The manufacturing method of a sulfide solid electrolyte according to any one of claims 9 to 11, further comprising subjecting the solid to a heat treatment again.

13. A sulfide solid electrolyte, wherein in an examination by Raman spectroscopy under conditions of a spot diameter of 3 µm and 10 test portions, a standard deviation of peak positions of P-S-bond-derived peaks in a range of 350 cm⁻¹ to 500 cm⁻¹ for the respective test portions is 2 cm⁻¹ or less.
